Europäisches Patentamt

European Patent Office

Office européen des brevets

(19)

(11) EP 0 446 380 B1

(12) EUROPEAN PATENT SPECIFICATION

(45) Date of publication and mention
of the grant of the patent:
**10.06.1998 Bulletin 1998/24**

(21) Application number: **90914766.2**

(22) Date of filing: **05.10.1990**

(51) Int Cl.[6]: **C08L 23/16**, C08K 3/06

(86) International application number:
**PCT/JP90/01291**

(87) International publication number:
**WO 91/05010 (18.04.1991 Gazette 1991/09)**

(54) **ETHYLENE-PROPYLENE-DIENE RUBBER, ELASTOMER COMPOSITION, AND VULCANIZED RUBBER PREPARED THEREFROM**

ETHYLEN-PROPYLEN-DIENKAUTSCHUK, ELASTOMERMISCHUNG UND DARAUS
HERGESTELLTER VULKANISIERTER KAUTSCHUK

CAOUTCHOUC D'ETHYLENE-PROPYLENE-DIENE, COMPOSITION ELASTOMERE ET
CAOUTCHOUC VULCANISE PREPARE A PARTIR D'EUX

(84) Designated Contracting States:
**AT BE CH DE DK ES FR GB IT LI LU NL SE**

(30) Priority: **05.10.1989 JP 260666/89**
**05.10.1989 JP 260667/89**

(43) Date of publication of application:
**18.09.1991 Bulletin 1991/38**

(73) Proprietor: **MITSUI CHEMICALS, INC.**
**Tokyo (JP)**

(72) Inventors:
• **NAKAHAMA, Hidenari,**
**MITSUI PETROCHEMICAL IND., LTD**
**Ichihara-shi, Chiba 299-01 (JP)**

• **MISHIMA, Takashi,**
**MITSUI PETROCHEMICAL IND., LTD.**
**Ichihara-shi, Chiba 299-01 (JP)**

(74) Representative: **Cresswell, Thomas Anthony et al**
**J.A. KEMP & CO.**
**14 South Square**
**Gray's Inn**
**London WC1R 5LX (GB)**

(56) References cited:
EP-A- 0 227 206          EP-A- 0 246 745
EP-A- 0 264 653          JP-A- 5 859 240
JP-A- 6 119 643          JP-B- 5 425 059
JP-B- 5 541 695          JP-B- 6 317 097
US-A- 3 884 993

## Description

This invention relates to ethylene-propylene-diene rubber, elastomer compositions and vulcanized rubbers thereof. EP-A-0246745 discloses compositions which comprise a component (A), which is a high molecular weight elastomer, and a component (B) which is a low molecular weight ethylene/alpha-olefin/non-conjugated polyene terpolymer. EP-A-227,206 relates to a polymer consisting of two fractions, one having a molecular weight from $10^4$ to $5 \times 10^5$, and the other having a higher molecular weight of from $2 \times 10^5$ to $10^7$. US-A-3884993 describes a synthetic rubber composition comprising a high molecular weight ethylene-propylene-diene rubber (EPDM) and a low molecular weight EPDM. EP-A-264 653 teaches the preparation of a rubber composition which comprises ethylene-propylene copolymer rubber or ethylene-propylene-nonconjugated-diene copolymer rubber by mixing all the components of the composition in one step.

Since ethylene-propylene-diene rubbers (EPDM) have such a molecular structure that the main chain thereof has no double bond, they are excellent in weather resistance, ozone resistance and thermal aging resistance and are widely used for the static sections of automobile parts such as weather stripping, glass door run channels, radiator hoses, etc. which require heat resistance.

On the other hand, most parts such as tyres, rubber vibration insulators, etc, which require mechanical strength against dynamic fatigue are prepared by using conjugated diene rubbers such as NR, SBR and BR or blends thereof.

With the higher performance of automobiles in recent years, it is expected that EDPM is applied to automobile parts which are conventionally considered to be prepared only from conjugated diene rubbers such as NR, SBR and BR or blends thereof which are excellent in dynamic fatigue resistance.

Though EPDM is excellent in weather resistance, ozone resistance and thermal aging resistance, products obtained therefrom are poor in reliability and dynamic fatigue resistance. This is the reason why EPDM alone cannot be used for the preparation of tyres and engine mounts and cannot be practically applied to automobile parts which require dynamic fatigue resistance.

Examples of the dynamic applications of EPDM are disclosed in JP-A-30582/1976 and 777/1977. In the inventions disclosed in these patent specifications, sulfur and sulfur initiator must be used and the inventions are directed to provide EPDM excellent in co-vulcanizability with highly unsaturated rubbers. Further, the co-vulcanizability thereof is evaluated only by the tensile strength (Tb) of the blends thereof with unsaturated rubbers. On the other hand, whether dynamic fatigue resistance is imparted to EPDM can be evaluated only after fatigue test. In this sense, these patent publications suggest nothing about EPDM which alone is excellent in dynamic fatigue resistance.

The inventions disclosed in the above-described patent publications relate to processes for the preparation of the co-vulcanized materials of lowly unsaturated rubbers and highly unsaturated rubbers and are directed not to impart dynamic fatigue resistance to EPDM, but to impart heat resistance and ozone resistance while retaining excellent dynamic fatigue resistance which conjugated diene rubbers possess.

JP-A-22551/1978 discloses a vulcanizable composition for rubber vibration insulator, as a rubber vibration insulator composition comprising an ethylene-propylene rubber having improved fatigue failure life, which is obtained by adding 5 to 90 parts by weight of carbon black, 0.1 to 2 parts by weight of sulfur, each of the amounts of said carbon black and said sulfur being per 100 parts by weight of following rubber component and optionally process oil to an oil-extended rubber composed of a mixture consisting of 10 to 50% by weight of an ethylene-propylene-ethylidenenorbornene terpolymer having an intrinsic viscosity [η] of not higher than 1.0 as measured at 70°C in xylene solution, 90 to 50% by weight of an ethylene-propylene-ethylidene-norbornene terpolymer having an intrinsic viscosity [η] of not lower than 3.0 as measured in the same manner as that described above and 20 to 80 parts by weight of extender oil based on 100 parts by weight of rubber.

However, the dynamic fatigue resistance of conventional EPDM cannot be greatly improved merely by combining a high-molecular-weight ethylene-propylene-ethylidenenorbornene terpolymer with a low-molecular-weight ethylene-propylene-ethylidenenorbornene terpolymer.

As an example of requiring dynamic fatigue resistance most, there is described in Rubber Chemistry Technology, Vol.44, page 1043 (October 1971) that the desired characteristics can be obtained by using EPDM having a high Mooney viscosity for All-EPDM for rubber vibration insulator.

However, the use of high-molecular-weight EPDM is considered to be a matter which is conceived by those skilled in the art. The most essential point of research and development on EPDM is to improve physical properties of EPDM without detriment to processability. The processability of EPDM is a factor which is contrary to an increase in the molecular weight. Any means for obtaining high molecular EPDM having an excellent processability has not been disclosed as yet.

Accordingly, it has been demanded to provide ethylene-propylene-diene rubber, an elastomer composition containing said ethylene-propylene-diene rubber and vulcanized rubber thereof, said ethylene-propylene-diene rubber being capable of withstanding use under severe conditions under which dynamic mechanical endurance is required and only natural rubber and blends thereof are conventionally considered to be usable and at the same time, said ethylene-propylene-diene rubber being capable of imparting excellent heat resistance, weather resistance and dynamic fatigue resistance.

The present inventors have found that an elastomer composition having surprisingly excellent dynamic fatigue resistance can be obtained by previously dispersing sulfur in a particular ethylene-propylene-diene rubber, then blending appropriate amounts of carbon black, a softener and other filler therewith and kneading them.

The present invention provides an ethylene-propylene-diene rubber composition which comprises an ethylene-propylene-diene rubber containing sulphur in a dispersed state, carbon black, a softener, a filler and, optionally, a vulcanization accelerator, wherein the ethylene-propylene-diene rubber has a Mooney viscosity $ML_{1+4}$ (100°C) of 60 to 120 and consists of a blend of:

(A) 90 to 40% by weight of a high-molecular weight ethylene-propylene-diene copolymer rubber having an ethylene content of 60 to 82 mol%, an intrinsic viscosity [η] of 2.5 to 5.0 dl/g as measured at 135°C in decalin and an iodine value of 8 to 35, and
(B) 10 to 60% by weight of a low-molecular-weight ethylene-propylene-diene copolymer rubber having an ethylene content of 60 to 82 mol%, an intrinsic viscosity [η] of 0.15 to 0.8 dl/g as measured at 135°C in decalin and an iodine value of 8 to 35; and wherein the composition is obtainable by a process which comprises dispersing sulfur in the ethylene-propylene-diene rubber before the addition thereto of the carbon black, softener, filler and optional vulcanization accelerator.

The invention also provides a vulcanised rubber composition which is obtainable by vulcanising an ethylene-propylene-diene rubber composition of the invention as defined above.

The ethylene-propylene-diene rubber compositions of the invention are capable of withstanding use under severe conditions under which dynamic mechanical endurance is required and only natural rubber and blends thereof are conventionally considered to be usable. At the same time they are capable of imparting excellent heat resistance, weather resistance and dynamic fatigue resistance.

The high-molecular-weight ethylene-propylene-diene copolymer rubbers (A) comprise ethylene, propylene and a non-conjugated diene.

Examples of the non-conjugated diene include non-conjugated dienes such as 1,4-hexadiene and cyclic non-conjugated dienes such as ethylidenenorbornene (ENB), norbornadiene, methylnorbornene, dicyclopentadiene, 2-methyl-norbornadiene and 5-vinyl-2-norbornene. Of these compounds, ENB is particularly preferable.

The copolymer rubbers (A) used in the compositions of the present invention have an iodine value of 8 to 35, preferably 10 to 30, said iodine value being an index of conjugated diene content.

The copolymer rubbers (A) have an intrinsic viscosity [η] of 2.5 to 5.0 dl/g, preferably 3.0 to 4.3 dl/g, as measured at 135°C in decalin. Their ethylene content is 60 to 82 mol%. It is preferred that the ethylene content is in the range of 60 to 72 mol% when used in products such as engine mounts for which less change in damping properties over a wide temperature range is required. In contrast a high-ethylene type EPDM having an ethylene content of 70 to 80 mol% and thus a high mechanical strength is preferred for products which are used at a temperature of not lower than room temperature.

The low-molecular-weight ethylene-propylene-diene copolymer rubber (B) used in the compositions of the present invention comprise ethylene, propylene and a non-conjugated diene. The non-conjugated diene is selected from those specified above for the copolymer rubber (A). ENB is particularly preferable.

The iodine value of the copolymer rubber (B) is, as with the copolymer rubber (A), in the range of 8 to 35, preferably 10 to 30.

In the present invention, with an increase in the difference in non-conjugated diene content, that is, in the iodine value between the copolymer rubbers (A) and (B), the vulcanization rate becomes non-uniform and properties such as strength and sets such as compression set (CS) are apt to exert a bad effect on the vulcanized rubber. Hence, it is preferred that the rubbers are so chosen that the iodine value of the copolymer rubber (B) is equal to that of the copolymer rubber (A).

The copolymer rubbers (B) used in the present invention have an intrinsic viscosity [η] of 0.15 to 0.8 dl/g, preferably 0.2 to 0.4 dl/g as measured at 135°C in decalin. Their ethylene content is from 60 to 82 mol%. It is preferred that the ethylene content is in the range of 60 to 72 mol% when used in products such as engine mounts for which less change in damping properties over a wide temperature range is required. In contrast, a high-ethylene type EPDM having an ethylene content in the range of 70 to 80 mol% and thus a high mechanical strength is preferred for products which are used at a temperature not lower than room temperature.

When the intrinsic viscosity [η] of the copolymer rubber (B) is lower than 0.15 dl/g, the properties thereof become equal to those of paraffinic or naphthenic softeners and hence no improvement in mechanical strength and fatigue life can be expected.

When the compositions of the invention are in an unvulcanized state, copolymer rubber (B) plays a role in widening the molecular weight distribution of the ethylene-propylene-diene rubbers and works as a softener so that the elastomer compositions of the present invention can retain high strength and excellent dynamic fatigue resistance which the copolymer rubbers (A) possess.

When the elastomer compositions are in a vulcanized state, copolymer rubber (B) has an effect of improving rubber strength and enhancing dynamic fatigue resistance of the resulting vulcanized rubber by a stress relaxing effect, because the copolymer rubber (B) itself participates in vulcanization.

In the compositions of the present invention, the copolymer rubber (A) is used in an amount of 90 to 40% by weight, preferably 85 to 60% by weight based on 100% by weight of the combined amount of the copolymer rubbers (A) and (B). The copolymer rubber (B) is used in an amount of 10 to 60% by weight, preferably 15 to 40% by weight based on 100% by weight of the combined amount of the copolymer rubbers (A) and (B).

The ethylene-propylene-diene rubber blend of copolymer rubbers (A) and (B) has a Mooney viscosity $ML_{1+4}$ (100°C) of 60 to 120, preferably 80 to 100.

Ethylene-propylene-diene rubbers having a Mooney viscosity $ML_{1+4}$ (100°C) within the range described above have good kneadability in Banbury mixer.

In order to evaluate a dynamic fatigue resistance of EDPM, the present inventors made a dynamic viscoelasticity test (distortion factor: 10%, temperature 190°C, sample stand: parallel plate, frequency: $1.58 \times 10^{-2}$ rad/s to $5 \times 10^{2}$ rad/s) wherein the abscissa axis represents frequency, the ordinate axis represents complex shear modulus $G^*$, $\omega_2$ is a frequency corresponding to $G^*=1E6$ and $\omega_1$ is a frequency corresponding to $G^*=1E5$ and expressed the state of the processability and physical properties of EPDM by an index $\omega_r$ defined by $\omega_r = \omega_2/\omega_1$. The index $\omega_r$ is variable in proportion to the number of the side chains of EPDM, mutual intertwisting ratio, the composition distribution and molecular weight distribution thereof. Hence, the state of processability and physical properties can be well expressed by using the index $\omega r$. Among the ethylene-propylene-diene rubbers of the present invention, ethylene-propylene-diene rubbers having $\omega_r$ of 50 to 150 are particularly excellent in balance between kneadability and physical properties. The ethylene-propylene-diene rubbers having $\omega_r$ within the range described above can be applied to dynamic uses, because they are excellent in kneadability as well as in crack growth resistance and thermal aging resistance.

In the compositions of the present invention, sulfur in a dispersed state is present in the constituent ethylene-propylene-diene rubber. Elastomer compositions having excellent dynamic fatigue resistance cannot be obtained by using an ethylene-propylene-diene rubber (EPDM) comprising merely a combination of the aforesaid copolymer rubbers (A) and (B), though an effect of improving dynamic fatigue resistance can be appreciably obtained by using the rubber comprising merely said combination in comparison with oil-extended high-molecular-weight ethylene-propylene-diene copolymer rubbers. However, the elastomer compositions containing EPDM comprising merely said combination are markedly inferior in dynamic fatigue resistance in comparison with diene rubbers such as natural rubber (NR).

The elastomer compositions of the present invention, having surprisingly excellent dynamic fatigue resistance, are obtained by previously dispersing sulfur in the ethylene-propylene-diene rubbers comprising the copolymer rubbers (A) and (B), then blending appropriate amounts of carbon black, a softener and other filler therewith and optional vulcanisation accelerator and kneading the resulting blend.

Methods for dispersing sulfur in the ethylene-propylene-diene rubbers (EPDM) include the following methods.

(1) A solvent method which comprises adding sulfur to the ethylene-propylene-diene rubber in the form of a solution and then removing the solvent to disperse the sulfur.

In this dispersion method, a solvent incapable of dissolving sulfur, such as hexane can be used, but sulfur required for vulcanization must be uniformly dispersed in the ethylene-propylene-diene rubber. In this sense, it is desirable to use a solvent capable of dissolving sulfur as well as the ethylene-propylene-diene rubber.

(2) A kneading method which comprises incorporating sulfur into the ethylene-propylene-diene rubber in solid form by means of a kneader or an internal mixer.

Temperature at which sulfur is dispersed is in the range of preferably 90 to 160°C, more preferably 110 to 150°C.

EPDM is originally poor in affinity with sulfur in comparison with diene rubbers and sulfur is poorly dispersed in EPDM by conventional kneading method. It is believed that when sulfur is previously dispersed in EPDM by the above-mentioned (1) solvent method or (2) kneading method, sulfur participating in crosslinking is well arranged near the main chains of the molecules of EPDM and when conventional kneading is carried out in that state, sulfur is activated by heat of kneading, the molecules of EPDM are effectively bonded to each other in a mesh form and sulfur itself forms polysulfur bonds to exert an effect of relaxing external stress effectively, thereby the effect of the present invention can be obtained, that is, dynamic fatigue resistance can be imparted. Thus, it is the most important factor for exhibiting the effect of the present invention that sulfur is present in a dispersed state in EPDM.

In the composition of the present invention, sulfur is typically used in an amount of 0.1 to 5 parts by weight, preferably 0.3 to 3.0 parts by weight based on 100 parts by weight of the ethylene-propylene-diene rubber.

Preparation of vulcanized rubber

The carbon black present in the composition may be, for instance, SRF, GPF, FEF, HAF, ISAF, SAF, FT or MT.

Vulcanized rubber can be obtained from the elastomer composition of the present invention by a process which comprises vulcanising the composition. The process typically entails preparing an unvulcanized rubber blend (elastomer composition), molding the rubber blend into a desired shape and then vulcanizing it in usual the vulcanization way of general-purpose rubber.

In the preparation of vulcanized rubbers, the types and amounts of softeners and fillers such as inorganic filler, the types and amounts of vulcanization accelerators and stages for preparing vulcanized rubber in addition to the above-described sulfur-containing ethylene-propylene-diene rubbers are properly chosen according to uses of vulcanized rubbers and required properties thereof.

As the softeners, those generally used for rubber are used. Examples of softeners include petroleum softeners such as process oil, lubricating oil, paraffin, liquid paraffin, petroleum asphalt and Vaseline; coal tar softeners such as coal tar and coal tar pitch; fatty oil softeners such as castor oil, linseed oil, colza oil and coconut oil; tall oil; factice; wax such as beeswax, carnauba wax and lanolin; fatty acids and salts thereof such as ricinoleic acid, palmitic acid, barium stearate, calcium stearate and zinc laurate; and synthetic high-molecular materials such as petroleum resin, atactic polypropylene and coumarone indene resin. Among them, petroleum softeners are preferred and process oil is particularly preferred.

Examples of inorganic fillers which may be used in the compositions of the present invention in addition to carbon black include fine silicic acid powder, precipitated calcium carbonate, heavy calcium carbonate, talc and clay. In the present invention, the inorganic fillers may be used in an amount of 20 to 150 parts by weight, preferably 30 to 100 parts by weight, more preferably 40 to 80 parts by weight based on 100 parts by weight of the ethylene-propylene-diene rubber containing no sulfur. When the inorganic fillers are used in an amount within the range described above, there can be obtained elastomer compositions and vulcanized rubbers which are excellent in wear resistance and dynamic fatigue resistance.

It is preferred that vulcanization accelerators are used in the present invention. Examples of the vulcanization accelerators include thiazole compounds such as N-cyclohexyl-2-benzothiazole-sulfenamide, N-oxydiethylene-2-benzothiazole-sulfenamide, N,N-diisopropyl-2-benzothiazole-sulfenamide, 2-mercaptobenzothiazole, 2-(2,4-dinitrophenyl)mercaptobenzothiazole, 2-(2,6-diethyl-4-morpholinothio)benzothiazole and dibenzothiazyl disulfide; guanidine compounds such as diphenylguanidine, triphenylguanidine, di-o-tolylguanidine, o-tolylbiguanide and diphenylguanidine phthalate; aldehyde-amine or aldehyde-ammonia compounds such as acetaldehyde-aniline reaction product, butylaldehyde-aniline condensate, hexamethylenetetramine and acetaldehyde-ammonia reaction product; imidazoline compounds such as 2-mercaptoimidazoline; thiourea compounds such as thiocarbanilide, diethylthiourea, dibutylthiourea, trimethylthiourea and di-o-tolylthiourea; thiuram compounds such as tetramethylthiuram monosulfide, tetramethylthiuram disulfide, tetraethylthiuram disulfide, tetrabutylthiuram disulfide and pentamethylenethiuram tetrasulfide; dithio acid salt compounds such as zinc dimethyldithiocarbamate, zinc diethyldithiocarbamate, zinc di-n-butyldithiocarbamate, zinc ethylphenyldithiocarbamate, zinc butylphenyldithiocarbamate, sodium dimethyldithiocarbamate, selenium dimethyldithiocarbamate and tellurium diethyldithiocarbamate; xanthate compounds such as zinc dibutylxanthate; and other compounds such as zinc oxide.

The vulcanization accelerators may be used in an amount of 0.1 to 20 parts by weight, preferably 0.2 to 10 parts by weight based on 100 parts by weight of the ethylene-propylene-diene rubber containing no sulfur.

Unvulcanized rubber blends are prepared in the following manner. Namely, the above-described ethylene-propylene-diene rubber of the present invention, the softener and the filler such as inorganic filler are kneaded at a temperature of 80 to 170°C for 3 to 10 minutes in a mixer such as Banbury mixer. Optionally, the vulcanization accelerator is added thereto. The resulting mixture is kneaded at a roller temperature of 40 to 80°C for 5 to 30 minutes by using rollers such as open rolls and the kneaded material is extruded to prepare a ribbon-form or sheet-form rubber blend.

The thus-prepared rubber blend is molded into a desired shape by means of extrusion, calendering rolls or press. The molded article simultaneously with molding or after molding is introduced into a vulcanizer and heated at a temperature of 150 to 270°C for 1 to 30 minutes to obtain vulcanized rubber. In conducting such vulcanization, a mold may be used or not used. When the mold is not used, molding and vulcanizing stages are generally carried out in a continuous manner.

As heating means in vulcanizing tank, there can be used hot air, glass bead-fluidized bed, UHF (ultrashort wave electromagnetic wave) and steam.

The vulcanized rubbers obtained from the elastomer compositions of the present invention have little unevenness in tensile strength and tensile elongation and less variability of fatigue test results so that they have an effect of stabilizing quality, the stabilization of quality being required when goods are actually manufactured. They can therefore be widely used in the fields of tyres, automobile parts, general-purpose industrial components and civil engineering and building components. Particularly, these vulcanized rubbers are suitable for use in the fields of materials such as muffler hangers, belts, rubber vibration insulators, engine mounts, tire treads for pneumatic tires, sidewalls for pneumatic tires and white sidewalls which require dynamic fatigue resistance, said materials prepared only from diene rubbers, particularly natural rubber or blends thereof being conventionally considered to be usable.

The present invention will be further illustrated in the following examples.

The evaluation tests of vulcanized sheets in Examples and Comparative Examples were carried out in accordance with the methods as described below.

(1) Tensile test

No. 3 type dumbbell specimens described in JIS K 6301 were punched out of vulcanized rubber sheets. The specimens were subjected to a tensile test under such conditions that the measuring temperatures was 25°C and the pulling rate was 500 mm/min according to the method described in JIS K 6301, item 3. Tensile stress at break TB and tensile elongation at break $E_B$ were measured.

(2) Thermal aging resistance

Thermal aging resistance was evaluated by the changes of the following retention of stress at break, the following retention at elongation at break and JIS A hardness according to JIS K 6301-1975, 6.5.

(i) No.1 type dumbbell tensile test specimens according to JIS K 6301 were punched out of sheets from the length direction thereof. The specimens were left to stand at 120°C for 72 hours, and then set to room temperature. The specimens were subjected to a tensile test at a rate of 200 mm/min. Stress at break (T Baged) and elongation at break (E Baged) were measured. Samples before thermal aging test were previously tested to measure stress at break (T Borig) and elongation at break (E Borig), and the retention of stress at break and the retention at break were calculated.

$$\text{Retention (\%) of stress at break}$$

$$= (T\ Baged/T\ Borig) \times 100$$

$$\text{Retention (\%) of elongation at break}$$

$$= (E\ Baged/E\ Borig) \times 100$$

(ii) Change of JIS A hardness (JIS K 6301)

$$A_H = H_2 - H_1$$

In the above formula, $A_H$ represents a change in JIS A hardness, $H_1$ represents a hardness before vulcanization and $H_2$ represents a hardness after vulcanization.

(3) Flex crack growth (flex test)

Flex crack growth was examined by using de Mattia type machine (number of revolution: 300 rpm). Each of three samples was repeatedly subjected to flexings at a measuring temperature of 40°C until the vulcanized rubber sheets were broken. Evaluation was made by the mean value of the number of flexings at the time of break.

(4) Endurance test (Monsanto fatigue test)

No. 3 type dumbbell specimens described in JIS K 6301 were punched out of vulcanized rubber sheets. Each of 20 specimens was fatigued by elongation under such conditions that the rate of elongation was 200 or 150%, the measuring temperature was 40°C and the number of revolutions was 300 rpm. The mean value of the number of times at the time of breaking of dumbbell specimens was referred to as an index of endurance.

(5) Heat generation test

Heat generation test was carried out by using Flexometer (Goodrich) under such conditions that the load applied was 15 lb and the stroke was 6.9 mm according to ASTM D 623. Raised temperature (a change in temperature, $T_2$ - $T_1 = \Delta T$) was measured. The number of specimens subjected to the test was two. The temperature at which the experiment was initiated was 37°C.

EXAMPLE 1

While applying heat, 100 parts by weight of an ethylene-propylene-diene rubber (hereinafter abbreviated to EPDM-1) having a Mooney viscosity $ML_{1+4}$ (100°C) of 82 and, $W_r$ of 80, composed of 70% by weight of a high-molecular-weight ethylene-propylene-5-ethylidene-2-norbornene copolymer rubber having an ethylene content of 70 mol%, an intrinsic viscosity [η] of 3.6 dl/g as measured at 135°C in decalin and an iodine value of 20 and 30% by weight of a low-molecular-weight ethylene-propylene-5-ethylidene-2-norbornene copolymer rubber having an ethylene content of 70 mol%, an intrinsic viscosity [η] of 0.24 dl/g as measured at 135°C in decalin and an iodine value of 20 and 0.75 parts by weight of sulfur were kneaded with sharewise addition at 130°C for 3 minutes by using a kneader to disperse sulfur in the rubber.

In a 4.3 liter Banbury mixer (manufactured by Kobe Steel, Ltd.) there were kneaded the resulting ethylene-propylene rubber containing sulfur dispersed therein, 1 part by weight of stearic acid, 5 part by weight of zinc oxide No. 1, 60 parts by weight of FEF-HS carbon (Niteron #10, manufactured by Shin Nittetsu Kagaku KK) and 10 parts by weight of oil (P-300, manufactured by Fuji Kosan KK).

To the resulting kneaded product were added 1.5 parts by weight of vulcanization accelerator (trade name: NOCCELER M, a product of Ōuchi Shinko Kagaku Kogyo KK),.1.5 parts by weight of vulcanization accelerator (trade name: NOCCELER DM, a product of Ōuchi Shinko Kagaku Kogyo KK) and 0.5 parts by weight of vulcanization accelerator (trade name: NOCCELER TT, a product of Ōuchi Shinko Kagaku Kogyo KK). The mixture was kneaded by means of 14 inch rollers under such conditions that the mixing time with rollers was 4 minutes, the surface temperatures of open roll were 50°C on front roll and 60°C on back roll and the number of revolutions of front roll was 16 rpm and the number of revolutions of back roll was 18 rpm. The kneaded product was processed into a sheet and pressed at 150°C for 30 minutes to obtain a vulcanized sheet of 2mm in thickness. The vulcanized sheet was subjected to tensile test, thermal aging resistance test, flex test, endurance test and heat generation test.

The results are shown in Table 1.

COMPARATIVE EXAMPLE 1

In a 4.3 liter Banbury mixer (manufactured by Kobe Steel, Ltd.) were kneaded 70 parts by weight of natural rubber (NR) [RSS No.1], 30 parts by weight of styrenebutadiene rubber (SBR) (trade name: Tafuden 1530, a product of Asahi Chemical Industry Co., Ltd.), 1 part by weight of stearic acid, 5 parts by weight of zinc oxide No. 1, 50 parts by weight of FEF-HS carbon (Niteron #10, manufactured by Shin Nittetsu Kagaku KK) and 40 parts by weight of oil (P-300, manufactured by Fuji Kosan KK).

To the kneaded product were added 1 part by weight of sulfur and 3 parts by weight of vulcanization accelerator (NOCCELER CZ, a product of Ōuchi Shinko Kagaku Kogyo KK). The mixture was kneaded by using rollers, processed into a sheet and pressed at 150°C for 30 minutes to obtain a vulcanized sheet of 2 mm in thickness. The vulcanized sheet was evaluated.

The results are shown in Table 1.

COMPARATIVE EXAMPLE 2

In a 4.3 liter Banbury mixer (manufactured by Kobe Steel, Ltd.) were kneaded 100 parts by weight of EPDM-1 of Example 1, 1 part by weight of stearic acid, 5 parts by weight of zinc oxide No. 1, 50 parts by weight of FEF-HS carbon (Niteron #10, manufactured by Shin Nittetsu Kagaku Kogyo KK) and 10 parts by weight of oil (P-300, manufactured by Fuji Kosan KK).

To the resulting kneaded product were added 0.75 part by weight of sulfur, 1.5 parts by weight of vulcanization accelerator (NOCCELER M, a product of Ōuchi Shinko Kagaku Kogyo KK), 1.5 parts by weight of vulcanization accelerator (NOCCELER DM, a product of Ōuchi Shinko Kagaku Kogyo KK) and 0.5 parts by weight of vulcanization accelerator (NOCCELER TT, a product of Ōuchi Shinko Kagaku Kogyo KK). The mixture was kneaded by using 14 inch rollers under such conditions that the mixing time with rollers was 4 minutes, the surface temperatures of open roll were 50°C on front roll and 60°C on back roll and the number of revolutions of front roll was 16 rpm and the number of revolutions of back roll was 18 rpm. The kneaded product was processed into a sheet and pressed at 150°C for 30 minutes to obtain a vulcanized sheet of 2mm in thickness. The evaluation of the vulcanized sheet was made.

The results are shown in Table 1.

COMPARATIVE EXAMPLE 3

The procedure of Comparative Example 2 was repeated except that the high-molecular-weight ethylene-propylene-5-ethylidene-2-norbornene copolymer rubber ($\omega_r$ : not less than 200) which was a component for forming EPDM-1 was in place of EPDM-1 of Example 1 and the amount of oil was 60 parts by weight to obtain a vulcanized sheet of 2 mm in thickness. The evaluation of the vulcanized sheet was made.

The result is shown in Table 1.

Table 1

| | Ex.1 | Comp.Ex. 1 | Comp.Ex. 2 | Comp.Ex. 3 |
|---|---|---|---|---|
| Modulus 100% [kg/cm$^2$] JIS K 6301 | 13 | 17 | 13 | 14 |
| Measuring temp.25°C<br>$T_B$ [kg/cm$^2$]<br>$E_B$ [%] | 240<br>710 | 210<br>560 | 190<br>600 | 185<br>580 |
| Thermal aging resistance<br>$A_R$ ($T_B$) [%]<br>$A_R$ ($E_B$) [%] | 78<br>89 | 35<br>34 | 76<br>82 | 74<br>85 |
| $A_H$ (JIS A) | +2 | +9 | +2 | +2 |
| Crack growth<br>The number of flexings [times] | 62,000 | 60,000 | 10,000 | 6,000 |
| Endurance test (Monsanto fatigue test)<br>(mean life) rate of elongation 200% [times] | 1,500,000 (not broken) | 18,500 | 6,900 | 4,300 |
| Heat generation<br>test Raised temp. [°C] | 39.5 | 30.0 | 72.0 | 68.5 |
| Note: $A_R$ ($T_B$) : Retention of stress at break<br>$A_R$ ($E_B$) : Retention of elongation at break<br>$A_H$ (JIS A) : Change of JIS A hardness determined according to JIS K 6301 | | | | |

COMPARATIVE EXAMPLE 4

An ethylene-propylene-diene rubber (Mitsui EPT 3091, a product of Mitsui Petrochemical Industries, Ltd.) was masticated for 2 minutes by using 8 inch rollers under such conditions that the surface temperatures of open roll were 50°C on front roll and 50°C on back roll and the number of revolutions of front roll was 16 rpm and the number of revolutions of back roll was 18 rpm.

To 100 parts by weight of the masticated ethylene-propylene-diene rubber were added 1 part by weight of stearic acid and 5 parts by weight of zinc flower No. 1, and the mixture was kneaded. The the resulting kneaded product were added 60 parts by weight of FEF-HS carbon (Niteron #10, manufactured by Shin Nittetsu Kagaku KK) and 60 parts by weight of oil (P-300, manufactured by Fuji Kosan KK), and the mixture was kneaded.

To the resulting kneaded product were added 0.75 part by weight of sulfur (a product of Hosoi Kagaku Kogyo KK), 1.5 parts by weight of vulcanization accelerator (NOCCELER PZ, a product of Ōuchi Shinko Kagaku Kogyo KK), 1.5 parts by weight of vulcanization accelerator (NOCCELER TT, a product of Ōuchi Shinko Kagaku Kogyo KK) and 0.5 parts by weight of vulcanization accelerator (NOCCELER M, a product of Ōuchi Shinko Kagaku Kogyo KK). The mixture was processed into a sheet and pressed at 160°C for 18 minutes to obtain a vulcanized sheet of 2 mm in thickness. The vulcanized sheet was subjected to tensile test, thermal aging test, endurance test and heat generation test.

The results are shown in Table 2.

EXAMPLE 2

A solution of the ethylene-propylene-diene rubber of Comparative Example 4 dissolved in a solution of hexane/benzene = 50/50 by volume was prepared. Further, a solution of sulfur in benzene was previously prepared wherein sulfur was used in such an amount to provide 0.75 parts by weight of sulfur per 100 parts by weight of the rubber component. Said solution of the ethylene-propylene-diene rubber was mixed with said solution of sulfur. The solvents were removed from the mixed solution to obtain the ethylene-propylene-diene rubber containing sulfur dispersed therein.

The procedure of Comparative Example 4 was then repeated except that the ethylene-propylene-diene rubber obtained above was used, the surface temperature of each of the front roll and the back roll was 120°C and sulfur was not used in the final kneading stage to obtain a vulcanized sheet of 2 mm in thickness. The evaluation of the vulcanized sheet was made.

The results are shown in Table 2.

EXAMPLE 3

The procedure of Example 2 was repeated except that there was used the ethylene-propylene-diene rubber containing sulfur dispersed therein obtained by kneading the ethylene-propylene-diene rubber of Comparative Example 4 and 0.75 part by weight, based on 100 parts by weight of the rubber component, of sulfur at a temperature of 120°C for 2 minutes by using a kneader to obtain a vulcanized sheet of 2 mm in thickness. The evaluation of the vulcanized sheet was made.

The results are shown in Table 2.

Table 2

| | Comp.Ex.4 | Example 2 | Example 3 |
|---|---|---|---|
| Modulus 100% [kg/cm$^2$]<br>JIS K 6301 | 13 | 12 | 12 |
| Measuring temp.25°C<br>$T_B$ [kg/cm$^2$]<br>$E_B$ [%] | 151<br>800 | 184<br>850 | 185<br>850 |
| Thermal aging resistance<br>$A_R$ ($T_B$) [%]<br>$A_R$ ($E_B$) [%] | 73<br>82 | 74<br>85 | 74<br>89 |
| $A_H$ (JIS A) | +2 | +2 | +2 |
| Endurance test (Monsanto fatigue test) [times]<br>(n=20; mean life) rate of elongation 150% | 400,000 | 1,000,000 (not broken) | 1,000,000 (not broken) |
| Heat generation<br>test Raised temp. [°C] | blow out | 63 | 63 |
| Note: $A_R$ ($T_B$) : Retention of stress at break<br>$A_R$ ($E_B$) : Retention of elongation at break<br>$A_H$ (JIS A) : Change of JIS A hardness determined according to JIS K 6301 | | | |

It is apparent from the Monsanto fatigue test results of Table 2 that the vulcanized rubbers obtained by using EPDM containing sulfur previously dispersed therein have excellent dynamic fatigue resistance in comparison with vulcanized rubber obtained by using EPDM to which sulfur was added in the final kneading stage. It is expected that the vulcanized rubbers of Examples 2 and 3 are excellent in fatigue resistance under a load as in tires and rubber vibration insulators, since they do not cause blow out.

COMPARATIVE EXAMPLE 5

While applying heat, 100 parts by weight of an ethylene-propylene-diene rubber comprising 70% by weight of a high-molecular-weight ethylene-propylene-5-ethylidene-2-norbornene copolymer rubber having an ethylene content of 70 mol%, an intrinsic viscosity [η] of 2.5 dl/g as measured at 135°C in decalin and an iodine value of 20 and 30% by weight of a low-molecular-weight ethylene-propylene-5-ethylidene-2-norbornene copolymer rubber having an ethylene content of 70 mol%, an intrinsic viscosity [η] of 0.3 dl/g as measured at 135°C in decalin and an iodine value of 20 and 2.0 parts by weight of sulfur were kneaded with sharewise addition at 130°C for 3 minutes by using a kneader to disperse sulfur.

In a 4.3 liter Banbury mixer (manufactured by Kobe Steel, Ltd.) were kneaded the resulting ethylene-propylene rubber containing sulfur dispersed therein, 1 part by weight of stearic acid, 5 parts by weight of zinc flower No. 1, 60 parts by weight of FEF-HS carbon (60 HG, manufactured by Asahi Carbon KK) and 60 parts by weight of oil (P-300, manufactured by Fuji Kosan KK).

To the thus-obtained kneaded product were added 0.5 parts by weight of vulcanization accelerator (trade name: NOCCELER M, a product of Ōuchi Shinko Kagaku Kogyo KK) and 1.5 parts by weight of vulcanization accelerator (trade name: NOCCELER TT, a product of Ōuchi Shinko Kagaku Kogyo KK). The mixture was kneaded by using 14 inch rollers under such conditions that the mixing time with rollers was 4 minutes, the surface temperatures of open roll were 50°C on front roll and 60°C on back roll and the number of revolutions of front roll was 16 rpm and the number of revolutions of back roll was 18 rpm. The kneaded material was processed into a sheet and pressed at 150°C for 20 minutes to obtain a vulcanized sheet of 2 mm in thickness. The vulcanized sheet was subjected to tensile test, hardness test (JIS A hardness), endurance test and heat generation test.

Each of the above blends was introduced into a pressurized type kneader (TDI-5 type, manufactured by Toshin Sangyo KK), and mixing was conducted under heating with steam. The resulting mixture was wound around the front roll (roll manufactured by Terakawa Seisakusho; 8"Ø x 20"L steam heating water-cooled automatic temperature controlling type), and 4 cuts was given it from right and left sides. After one minute, the roll processability of the mixture was evaluated. The space between the front roll and the back roll was 0.6 mm.

Indication level of roll processability

E : Excellent
G : Good
F : Fair
P : Poor
VP: Very poor

Criterion of indication

(1) After the first cut, the kneaded material wound around the roll was evaluated.

Lower limit of E : No hole was found from the beginning.
Lower limit of G : About 10 or less of small holes of 2 to 5 mmØ and several holes of about 10 mmØ were found.
Lower limit of F : Parts joined together on the surface of the roll amounted to at least 50% of the kneaded material.
Lower limit of P : Most of the kneaded material was sagging and only a part thereof was wound around the roll.
Upper limit of VP: The kneaded material came off from the roll unless it was supported by the hand.

(2) After each of the second, third and fourth cuts, the kneaded material wound around the roll was evaluated.

Lower limit of E : There was not found a tendency to cause bagging, and the kneaded material was completely in close contact with the roll.
Lower limit of F : The kneaded material was apparently in close contact with the roll and did not come off, but waviness was partly formed on the upper part of the roll. Even if bagging was caused by slip, etc., the kneaded material could be restored to the original state by one correction with human power, though it could be restored by itself.
Lower limit of G : The kneaded material was in close contact with the outer periphery of the lower half of the front roll, but when the kneaded material was passed therethrough, it was in poor contact with the upper part of the roll and waviness was partly formed.
Lower limit of P : Bagging was caused, but the kneaded material could be prevented from sagging from the roll when correction was made at intervals.
Upper limit of VP: Bagging was caused and the kneaded material was sagging from the roll unless correction was continuously made.

The above results are shown in Table 3.

EXAMPLES 4 AND 5

The procedure of Comparative Example 5 was repeated except that a high-molecular-weight ethylene-propylene-5-ethylidene-2-norbornene copolymer rubber having an ethylene content of 70 mol%, an intrinsic viscosity [η] of 3.0 dl/g as measured at 135°C in decalin and an iodine value of 20 and a high-molecular-weight ethylene-propylene-5-ethylidene-2-norbornene copolymer rubber having an ethylene content of 70 mol%, an intrinsic viscosity [η] of 4.6 dl/g as measured at 135°C in decalin and an iodine value of 20 were used in Example 4 and Example 5, respectively, in place of the high-molecular-weight ethylene-propylene-5-ethylidene-2-norbornene copolymer rubber of Comparative Example 5 to obtain vulcanized sheets of 2 mm in thickness. The evaluation of the valucanized sheets was made. Roll processability was also evaluated in the same way as in Comparative Example 5.

The results are shown in Table 3.

COMPARATIVE EXAMPLE 6

The procedure of Comparative Example 5 was repeated except that a high-molecular-weight ethylene-propylene-5-ethylidene-2-norbornene copolymer rubber having an ethylene content of 70 mol%, an intrinsic viscosity [η] of 5.2 dl/g as measured at 135°C in decalin and an iodine value of 20 was used in place of the high-molecular-weight ethylenepropylene-5-ethylidene-2-norbornene copolymer rubber of Comparative Example 5 to obtain a vulcanized sheet of 2 mm in thickness. The evaluation of the valucanized rubber was made. Roll processability was also evaluated in the same way as in Comparative Example 5.

The results are shown in Table 3.

COMPARATIVE EXAMPLES 7 AND 8

The procedure of Comparative Example 5 was repeated except that a high-molecular-weight ethylene-propylene-5-ethylidene-2-norbornene copolymer rubber having an ethylene content of 70 mol%, an intrinsic viscosity [η] of 4.6 dl/g as measured at 135°C in decalin and an iodine value of 20 was used in place of the high-molecular-weight ethylenepropylene-5-ethylidene-2-norbornene copolymer rubber of Comparative Example 5, and a low-molecular-weight ethylenepropylene-5-ethylidene-2-norbornene copolymer rubber having an ethylene content of 70 mol%, an intrinsic viscosity [η] of 0.10 dl/g as measured at 135°C in decalin and an iodine value of 20 and a low-molecular-weight ethylene-propylene-5-ethylidene-2-norbornene copolymer rubber having an ethylene content of 70 mol%, an intrinsic viscosity [η] of 1.0 dl/g as measured at 135°C in decalin and an iodine value of 20 were used in Comparative Example 7 and Comparative Example 8, respectively, in place of the low-molecular-weight ethylenepropylene-5-ethylidene-2-norbornene copolymer rubber of Comparative Example 5 to obtain vulcanized sheets of 2 mm in thickness. The evaluation of the valucanized sheets was made. Roll processability was also evaluated in the same way as in Comparative Example 5.

The results are shown in Table 3.

Table 3

| | Comp.Ex. 5 | Ex. 4 | Ex. 5 | Comp.Ex. 6 | Comp.Ex. 7 | Comp.Ex. 8 |
|---|---|---|---|---|---|---|
| Measuring temp.25°C $T_B$ [kg/cm²] | 185 | 195 | 200 | 195 | 210 | 215 |
| $E_B$ [%] | 500 | 560 | 580 | 590 | 570 | 650 |
| Hs (JIS A hardness) (Note 1) | 55 | 54 | 54 | 55 | 54 | 62 |
| Endurance test (Monsanto fatigue test) (mean life) rate of elongation 200% [times] | 100,000 | 400,000 | 480,000 | 250,000 | 280,000 | 200,000 |
| Heat generation test Raised temp. [°C] | 65 | 58 | 55 | 63 | 68 | 69 |
| Processability | E | E | E | P | P | P |

(Note 1)  Hs : JIS A hardness determined according to JIS K 6301

## Claims

Claims for the following Contracting States : AT, BE, CH, LI, DE, DK, FR, GB, IT, LU, NL, SE

1.  An ethylene-propylene-diene rubber composition which comprises an ethylene-propylene-diene rubber containing sulphur in a dispersed state, carbon black, a softener, a filler and, optionally, a vulcanization accelerator, wherein the ethylene-propylene-diene rubber has a Mooney viscosity $ML_{1+4}$ (100°C) of 60 to 120 and consists of a blend of:

(A) 90 to 40% by weight of a high-molecular weight ethylene-propylene-diene copolymer rubber having an ethylene content of 60 to 82 mol%, an intrinsic viscosity $[\eta]$ of 2.5 to 5.0 dl/g as measured at 135°C in decalin and an iodine value of 8 to 35, and

(B) 10 to 60% by weight of a low-molecular-weight ethylene-propylene-diene copolymer rubber having an ethylene content of 60 to 82 mol%, an intrinsic viscosity $[\eta]$ of 0.15 to 0.8 dl/g as measured at 135°C in decalin and an iodine value of 8 to 35; and wherein the composition is obtainable by a process which comprises dispersing sulfur in the ethylene-propylene-diene rubber before the addition thereto of the carbon black, softener, filler and optional vulcanization accelerator.

2. A composition according to claim 1 wherein the dispersed sulfur is present in an amount of 0.1 to 5 parts by weight based on 100 parts by weight of said ethylene-propylene-diene rubber.

3. A composition according to claim 1 or 2 wherein $\omega_r$, $(\omega_2/\omega_1)$ which is determined by a dynamic viscoelasticity test and is an index of processability and physical properties of said ethylene-propylene-diene rubber, is in the range of 50 to 150.

4. A process for producing an ethylene-propylene-diene rubber composition, which process comprises first dispersing sulfur in an ethylene-propylene-diene rubber which has a Mooney viscosity $ML_{1+4}$ (100°C) of 60 to 120 and consists of a blend of:

(A) 90 to 40% by weight of a high-molecular weight ethylene-propylene-diene copolymer rubber having an ethylene content of 60 to 82 mol% an intrinsic viscosity $[\eta]$ of 2.5 to 5.0 dl/g as measured at 135°C in decalin and an iodine value of 8 to 35, and

(B) 10 to 60% by weight of a low-molecular-weight ethylene-propylene-diene copolymer rubber having an ethylene content of 60 to 82 mol%, an intrinsic viscosity $[\eta]$ of 0.15 to 0.8 dl/g as measured at 135°C in decalin and an iodine value of 8 to 35; and then adding thereto carbon black, a softener, a filler and, optionally, a vulcanization accelerator.

5. A process according to claim 4 which comprises adding the sulfur to the ethylene-propylene-diene rubber in the form of a solution and then removing the solvent to disperse the sulfur in the rubber.

6. A process according to claim 4 which comprises incorporating the sulfur into the ethylene-propylene-diene rubber in solid form by means of a kneader or an internal mixer.

7. A process according to any one of claims 4 to 6 which comprises dispersing the sulfur in the ethylene-propylene-diene rubber in an amount of 0.1 to 5 parts by weight based on 100 parts by weight of the ethylene propylene-diene rubber containing no sulfur.

8. A process according to any one of claims 4 to 7 which further comprises vulcanizing the composition.

9. A vulcanized rubber composition which is obtainable by vulcanizing the ethylene-propylene-diene rubber composition as claimed in any one of claims 1 to 3.

**Claims for the following Contracting State : ES**

1. A process for producing an ethylene-propylene-diene rubber composition, which process comprises first dispersing sulfur in an ethylene-propylene-diene rubber which has a Mooney viscosity $ML_{1+4}$ (100°C) of 60 to 120 and consists of a blend of:

(A) 90 to 40% by weight of a high-molecular weight ethylene-propylene-diene copolymer rubber having an ethylene content of 60 to 82 mol% an intrinsic viscosity $[\eta]$ of 2.5 to 5.0 dl/g as measured at 135°C in decalin and an iodine value of 8 to 35, and

(B) 10 to 60% by weight of a low-molecular-weight ethylene-propylene-diene copolymer rubber having an ethylene content of 60 to 82 mol%, an intrinsic viscosity $[\eta]$ of 0.15 to 0.8 dl/g as measured at 135°C in decalin and an iodine value of 8 to 35; and then adding thereto carbon black, a softener, a filler and, optionally, a vulcanization accelerator.

2. A process according to claim 1 which comprises adding the sulfur to the ethylene-propylene-diene rubber in the form of a solution and then removing the solvent to disperse the sulfur in the rubber.

3. A process according to claim 1 which comprises incorporating the sulfur into the ethylene-propylene-diene rubber in solid form by means of a kneader or an internal mixer.

4. A process according to any one of claims 1 to 3 which comprises dispersing the sulfur in the ethylene-propylene-diene rubber in an amount of 0.1 to 5 parts by weight based on 100 parts by weight of the ethylene propylene-diene rubber containing no sulfur.

5. A process according to any one of claims 1 to 4 which further comprises vulcanizing the composition.

**Patentansprüche**

**Patentansprüche für folgende Vertragsstaaten : AT, BE, CH, LI, DE, DK, FR, GB, IT, LU, NL, SE**

1. Ethylen/Propylen/Dien-Kautschukmasse, umfassend einen Ethylen/Propylen/Dien-Kautschuk, enthaltend Schwefel in dispergierter Form, Ruß, einen Weichmacher, einen Füllstoff und gegebenenfalls einen Vulkanisationsbeschleuniger, wobei der Ethylen/Propylen/Dien-Kautschuk eine Mooney-Viskosität $ML_{1+4}$ (100°C) von 60 bis 120 hat und besteht aus einem Gemisch aus:

   (A) 90 bis 40 Gew.-% eines Ethylen/Propylen/Dien-Copolymerkautschuks mit hohem Molekulargewicht mit einem Ethylengehalt von 60 bis 82 Mol-%, einer Grundviskosität [η] von 2,5 bis 5,0 dl/g, gemessen bei 135°C in Decalin, und einer Iodzahl von 8 bis 35 und
   (B) 10 bis 60 Gew.-% eines Ethylen/Propylen/Dien-Copolymerkautschuks mit niedrigem Molekulargewicht mit einem Ethylengehalt von 60 bis 82 Mol-%, einer Grundviskosität [η] von 0,15 bis 0,8 dl/g, gemessen bei 135°C in Decalin, und einer Iodzahl von 8 bis 35,

   wobei die Masse erhältlich ist nach einem Verfahren, umfassend das Dispergieren von Schwefel in dem Ethylen/Propylen/Dien-Kautschuk vor der Zugabe von Ruß, Weichmacher, Füllstoff und gegebenenfalls Vulkanisationsbeschleuniger.

2. .Masse nach Anspruch 1, wobei der dispergierte Schwefel in einer Menge von 0,1 bis 5 Gewichtsteilen, bezogen auf 100 Gewichtsteile des Ethylen/Propylen/Dien-Kautschuks, vorhanden ist.

3. Masse nach Anspruch 1 oder 2, wobei $\omega_r$, ($\omega_2/\omega_1$), das durch einen dynamischen Viskoelastizitätstest bestimmt worden ist und das ein Index für die Verarbeitbarkeit und die physikalischen Eigenschaften des Ethylen/Propylen/Dien-Kautschuks ist, im Bereich von 50 bis 150 liegt.

4. Verfahren zur Herstellung einer Ethylen/Propylen/Dien-Kautschukmasse, wobei das Verfahren zunächst das Dispergieren von Schwefel in einem Ethylen/Propylen/Dien-Kautschuk, der eine Mooney-Viskosität $ML_{1+4}$ (100°C) von 60 bis 120 aufweist und besteht aus einem Gemisch aus

   (A) 90 bis 40 Gew.-% eines Ethylen/Propylen/Dien-Copolymerkautschuks mit hohem Molekulargewicht mit einem Ethylengehalt von 60 bis 82 Mol-%, einer Grundviskosität [η] von 2,5 bis 5,0 dl/g, gemessen bei 135°C in Decalin, und einer Iodzahl von 8 bis 35 und
   (B) 10 bis 60 Gew.-% eines Ethylen/Propylen/Dien-Copolymerkautschuks mit niedrigem Molekulargewicht mit einem Ethylengehalt von 60 bis 82 Mol-%, einer Grundviskosität [η] von 0,15 bis 0,8 dl/g, gemessen bei 135°C in Decalin, und einer Iodzahl von 8 bis 35,

   und anschließend das Zugeben von Ruß, einem Weichmacher, einem Füllstoff und gegebenenfalls einem Vulkanisationsbeschleuniger umfaßt.

5. Verfahren nach Anspruch 4, umfassend das Zugeben des Schwefels zu dem Ethylen/Propylen/Dien-Kautschuk in Form einer Lösung und anschließendes Entfernen des Lösungsmittels, um den Schwefel in dem Kautschuk zu dispergieren.

6. Verfahren nach Anspruch 4, umfassend das Einmischen des Schwefels in den Ethylen/Propylen/Dien-Kautschuk in fester Form mit Hilfe eines Kneters oder eines Innenmischers.

7. Verfahren nach einem der Ansprüche 4 bis 6, umfassend das Dispergieren des Schwefels in dem Ethylen/Propylen/Dien-Kautschuk in einer Menge von 0,1 bis 5 Gewichtsteilen, bezogen auf 100 Gewichtsteile des Ethylen/Propylen/Dien-Kautschuks, der keinen Schwefel enthält.

8. Verfahren nach einem der Ansprüche 4 bis 7, umfassend ferner das Vulkanisieren der Masse.

9. Vulkanisierte Kautschukmasse, erhältlich durch Vulkanisieren der Ethylen/Propylen/Dien-Kautschukmasse nach einem der Ansprüche 1 bis 3.

## Patentansprüche für folgenden Vertragsstaat : ES

1. Verfahren zur Herstellung einer Ethylen/Propylen/Dien-Kautschukmasse, wobei das Verfahren zunächst das Dispergieren von Schwefel in einem Ethylen/Propylen/Dien-Kautschuk, der eine Mooney-Viskosität $ML_{1+4}$ (100°C) von 60 bis 120 aufweist und besteht aus einem Gemisch aus

(A) 90 bis 40 Gew.-% eines Ethylen/Propylen/Dien-Copolymerkautschuks mit hohem Molekulargewicht mit einem Ethylengehalt von 60 bis 82 Mol-%, einer Grundviskosität $[\eta]$ von 2,5 bis 5,0 dl/g, gemessen bei 135°C in Decalin, und einer Iodzahl von 8 bis 35 und
(B) 10 bis 60 Gew.-% eines Ethylen/Propylen/Dien-Copolymerkautschuks mit niedrigem Molekulargewicht mit einem Ethylengehalt von 60 bis 82 Mol-%, einer Grundviskosität $[\eta]$ von 0,15 bis 0,8 dl/g, gemessen bei 135°C in Decalin und einer Iodzahl von 8 bis 35,

und anschließend das Zugeben von Ruß, einem Weichmacher, einem Füllstoff und gegebenenfalls einem Vulkanisationsbeschleuniger umfaßt.

2. Verfahren nach Anspruch 1, umfassend das Zugeben des Schwefels zu dem Ethylen/Propylen/Dien-Kautschuk in Form einer Lösung und anschließendes Entfernen des Lösungsmittels, um den Schwefel in dem Kautschuk zu dispergieren.

3. Verfahren nach Anspruch 1, umfassend das Einmischen des Schwefels in den Ethylen/Propylen/Dien-Kautschuk in fester Form mit Hilfe eines Kneters oder eines Innenmischers.

4. Verfahren nach einem der Ansprüche 1 bis 3, umfassend das Dispergieren des Schwefels in dem Ethylen/Propylen/Dien-Kautschuk in einer Menge von 0,1 bis 5 Gewichtsteilen, bezogen auf 100 Gewichtsteile des Ethylen/Propylen/Dien-Kautschuks, der keinen Schwefel enthält.

5. Verfahren nach einem der Ansprüche 1 bis 4, umfassend ferner das Vulkanisieren der Masse.

## Revendications

## Revendications pour les Etats contractants suivants : AT, BE, CH, LI, DE, DK, FR, GB, IT, LU, NL, SE

1. Composition à base de caoutchouc éthylène-propylène-diène, qui comprend un caoutchouc éthylène-propylène-diène contenant du soufre à l'état dispersé, du noir de carbone, un assouplissant, une charge et éventuellement un accélérateur de vulcanisation, ledit caoutchouc éthylène-propylène-diène ayant une viscosité Mooney $ML_{1+4}$ (100 °C) de 60 à 120 et étant constitué d'un mélange de :

(A) 90 à 40 % en poids d'un caoutchouc qui est un copolymère éthylène-propylène-diène de masse moléculaire élevée, ayant une teneur en éthylène de 60 à 82 % en moles, une viscosité intrinsèque [η] mesurée dans la décaline à 135 °C, de 2,5 à 5,0 dl/g et un indice d'iode de 8 à 35, et
(B) 10 à 60 % en poids d'un caoutchouc qui est un copolymère éthylène-propylène-diène de faible masse moléculaire, ayant une teneur en éthylène de 60 à 82 % en moles, une viscosité intrinsèque [η] mesurée dans la décaline à 135 °C, de 0,15 à 0,8 dl/g et un indice d'iode de 8 à 35,

composition que l'on peut obtenir par un procédé qui comprend la dispersion de soufre dans le caoutchouc éthylène-propylène-diène avant l'addition au caoutchouc du noir de carbone, de l'assouplissant, de la charge et éventuellement de l'accélérateur de vulcanisation.

2. Composition selon la revendication 1, dans laquelle le soufre dispersé est présent à raison de 0,1 à 5 parties en poids pour 100 parties en poids dudit caoutchouc éthylène-propylène-diène.

3. Composition selon la revendication 1 ou 2, pour laquelle l'indice $\omega_r$ ($\omega_2/\omega_1$) qui est déterminé par un essai de viscoélasticité dynamique et qui est un indice caractérisant l'aptitude à être travaillé et les propriétés physiques dudit caoutchouc éthylène-propylène-diène, est compris dans l'intervalle allant de 50 à 150.

4. Procédé de production d'une composition à base de caoutchouc éthylène-propylène-diène, qui comprend d'abord la dispersion de soufre dans un caoutchouc éthylène-propylène-diène ayant une viscosité Mooney $ML_{1+4}$ (100 °C) de 60 à 120 et constitué d'un mélange de :

   (A) 90 à 40 % en poids d'un caoutchouc qui est un copolymère éthylène-propylène-diène de masse moléculaire élevée, ayant une teneur en éthylène de 60 à 82 % en moles, une viscosité intrinsèque [η] mesurée dans la décaline à 135 °C, de 2,5 à 5,0 dl/g et un indice d'iode de 8 à 35, et
   (B) 10 à 60 % en poids d'un caoutchouc qui est un copolymère éthylène-propylène-diène de faible masse moléculaire, ayant une teneur en éthylène de 60 à 82 % en moles, une viscosité intrinsèque [η] mesurée dans la décaline à 135 °C, de 0,15 à 0,8 dl/g et un indice d'iode de 8 à 35,

   puis l'addition au produit obtenu de noir de carbone, d'un assouplissant, d'une charge et éventuellement d'un accélérateur de vulcanisation.

5. Procédé selon la revendication 4, qui comprend l'addition du soufre au caoutchouc éthylène-propylène-diène sous la forme d'une solution, puis l'élimination du solvant pour disperser le soufre dans le caoutchouc.

6. Procédé selon la revendication 4, qui comprend l'incorporation du soufre dans le caoutchouc éthylène-propylène-diène sous forme solide, au moyen d'un malaxeur ou d'un mélangeur interne.

7. Procédé selon l'une quelconque des revendications 4 à 6, qui comprend la dispersion du soufre dans le caoutchouc éthylène-propylène-diène, à raison de 0,1 à 5 parties en poids de soufre pour 100 parties en poids du caoutchouc éthylène-propylène-diène exempt de soufre.

8. Procédé selon l'une quelconque des revendications 4 à 7, qui comprend en outre la vulcanisation de la composition.

9. Composition à base de caoutchouc vulcanisé, que l'on peut obtenir en vulcanisant la composition à base de caoutchouc éthylène-propylène-diène telle que revendiquée dans l'une quelconque des revendications 1 à 3.


**Revendications pour l'Etat contractant suivant : ES**

1. Procédé de production d'une composition à base de caoutchouc éthylène-propylène-diène, qui comprend d'abord la dispersion de soufre dans un caoutchouc éthylène-propylène-diène ayant une viscosité Mooney $ML_{1+4}$(100 °C) de 60 à 120 et constitué d'un mélange de :

   (A) 90 à 40 % en poids d'un caoutchouc qui est un copolymère éthylène-propylène-diène de masse moléculaire élevée, ayant une teneur en éthylène de 60 à 82 % en moles, une viscosité intrinsèque [η] mesurée dans la décaline à 135 °C, de 2,5 à 5,0 dl/g et un indice d'iode de 8 à 35, et
   (B) 10 à 60 % en poids d'un caoutchouc qui est un copolymère éthylène-propylène-diène de faible masse moléculaire, ayant une teneur en éthylène de 60 à 82 % en moles, une viscosité intrinsèque [η] mesurée dans la décaline à 135 °C, de 0,15 à 0,8 dl/g et un indice d'iode de 8 à 35,

puis l'addition au produit obtenu de noir de carbone, d'un assouplissant, d'une charge et éventuellement d'un accélérateur de vulcanisation.

2. Procédé selon la revendication 1, qui comprend l'addition du soufre au caoutchouc éthylène-propylène-diène sous la forme d'une solution, puis l'élimination du solvant pour disperser le soufre dans le caoutchouc.

3. Procédé selon la revendication 1, qui comprend l'incorporation du soufre dans le caoutchouc éthylène-propylène-diène sous forme solide, au moyen d'un malaxeur ou d'un mélangeur interne.

4. Procédé selon l'une quelconque des revendications 1 à 3, qui comprend la dispersion du soufre dans le caoutchouc éthylène-propylène-diène, à raison de 0,1 à 5 parties en poids de soufre pour 100 parties en poids du caoutchouc éthylène-propylène-diène exempt de soufre.

5. Procédé selon l'une quelconque des revendications 1 à 4, qui comprend en outre la vulcanisation de la composition.